# EUROPÄISCHE PATENTSCHRIFT

(11) **EP 1 478 585 B1**
(45) Veröffentlichungstag und Bekanntmachung des Hinweises auf die Patenterteilung: **31.08.2005**
(21) Anmeldenummer: 04710350.2
(22) Anmeldetag: 12.02.2004
(51) Int. Cl.: B65G 63/00

(54) **UMSCHLAGANLAGE IN EINEM SEE- ODER BINNENHAFEN**
LOADING AND UNLOADING STATION IN A SEA PORT OR RIVER PORT
INSTALLATION DE TRANSBORDEMENT POUR PORT MARITIME OU PORT DE NAVIGATION INTERIEURE

(30) Priorität: 22.02.2003 DE 10307579
(43) Veröffentlichungstag der Anmeldung: 24.11.2004
(73) Patentinhaber: Gottwald Port Technology GmbH, 40597 Düsseldorf (DE)
(72) Erfinder: KRÖLL, Joachim, 41363 Jüchen (DE); FRANZEN, Hermann, 41238 Mönchengladbach (DE); DOBNER, Mathias, 41569 Rommerskirchen (DE)
(74) Vertreter: Moser, Jörg Michael
(86) Internationale Anmeldenummer: PCT/EP2004/001291
(87) Internationale Veröffentlichungsnummer: WO 2004/074147

(56) Entgegenhaltungen:
- DE-A- 10 002 915
- DE-A- 19 923 813
- US-A- 5 951 226
- PATENT ABSTRACTS OF JAPAN vol. 2000, no. 10, 17. November 2000 (2000-11-17) & JP 2000 198546 A (ISHIKAWAJIMA HARIMA HEAVY IND CO LTD), 18. Juli 2000 (2000-07-18)

## Beschreibung

Die Erfindung betrifft eine Umschlaganlage in einem See- oder Binnenhafen, insbesondere für ISO-Container, mit einem entlang eines Kais angeordneten, aus einzelnen zeilenartigen Lagermodulen bestehendem Container-Terminal und mindestens einer mit den Lagermodulen zusammenwirkenden Ladeanlage für den Lastumschlag von und zu einem am Kai liegendem Schiff, wobei je Lagermodul mindestens ein aufgeständerter Stapelkran die Übernahme, den Horizontaltransport und das Stapeln der Container übernimmt und mit quer zu den einzelnen Lagermodulen in einer unterschiedlichen horizontalen Ebene verfahrbaren und unabhängig voneinander agierenden Quertransportern zusammenwirkt, die den Horizontaltransport der Container zwischen den Lagermodulen übernehmen.

Für den Umschlag von ISO-Containern zwischen verschiedenartigen Transportmitteln, beispielsweise Schiff, Bahn oder LKW werden Ladeanlagen eingesetzt, die einen weitestgehend störungsfreien Stückgutumschlag bei hohen Durchsatzzahlen gewährleisten müssen. Zentraler Bestandteil einer Container-Umschlaganlage ist meist ein Containerlager, das die Stückgutströme entkoppelt und somit die bedarfsgerechte Bedienung der verschiedenartigen Transportmittel sicherstellt. Die aufkommens- und bedarfsgerechte Bedienung der verschiedenartigen Transportmittel erfordert eine optimierte Konzeptionierung der gesamten Umschlaganlage.

Eine Umschlagenlage gemäß dem Oberbegriff des Anspruchs 1 ist aus der DE-A-100 02 915 bekannt. Der Lastausleger eines Hafenmobilkran reicht vom Bereich des zu entladenden Schiffes bis in den Bereich mindestens eines eine Schnittstelle zwischen dem Hafenmobilkran und den Lagermodulen des Containerlagers bildenden Übergabeplatzes, wo der Container abgestellt wird. Mindestens ein durch eine übergeordnete Lagerlogistik überwachter und gesteuerter Stapelkran je Lagermodul ergreift an dem jeweiligen Übergabeplatz den vom Hafenmobilkran abgesetzten Container und übernimmt im Folgenden den Horizontaltransport und das Stapeln der Container im Containerlager. Dadurch kann der bei herkömmlichen automatisierten Anlagen vorgesehene Horizontaltransport zwischen Schiff und Containerlager, der gewöhnlich mit manuellen oder automatisierten Transportfahrzeugen bewerkstelligt wurde, entfallen. Der Stapelkran selbst ist konventionell als aufgeständerter Brückenkran mit einer Laufkatze ausgebildet und überspannt in bekannter Weise jeweils ein Lagermodul des Containerlagers. Vorzugsweise ist das bekannte Containerlager entsprechend der Lagercharakteristik in mindestens zwei Bereiche mittig zum Containerlager aufgeteilt, wobei die Stapelkrane beide Bereiche überfahren.

Die Lagermodule des bekannten Containerlagers werden mittels zweier quer zu den einzelnen Lagermodulen in unterschiedlichen horizontalen Ebenen verfahrbarer und unabhängig voneinander agierender Quertransporter miteinander verknüpft, die ebenfalls durch die übergeordnete Lagerlogistik überwacht und gesteuert werden. Auf diese Weise können die in den einzelnen Lagermodulen operierenden vollautomatischen Stapelkrane die Container von den Übergabeplätzen entweder direkt in die zugehörigen Lagermodule oder zu einem dieser beiden Quertransporter transportieren. Die Quertransporter steuern entweder ein anderes Lagermodul oder Ausschleuspunkte an, wo das Aus- und Einschleusen der Containern von und zu LKWs erfolgt.

Das vorstehend beschriebene Containerlagersystem ist besonders gut geeignet und konzipiert, um auch den Betreibem kleinerer Umschlaganlagen den vollautomatischen Betrieb des Terminals zu ermöglichen. Die Umschlagleistung des Terminals ist allerdings durch die nur zwei einsetzbaren Quertransporter stark eingeschränkt, zumal durch Überschneidungen beim Verfahren eines Quertransporters und gleichzeitigem Ladevorgang des zweiten Quertransporters durch den Stapelkran ein Quertransporter blockiert ist. Für größere Anlagen stellt dies einen erheblichen Nachteil dar, der die Durchsatzleistung sowie die Verfügbarkeit der Ladeeinrichtungen einschränkt.

Ausgehend von einer vorstehend beschriebenen Umschlaganlage besteht die Aufgabe der vorliegenden Erfindung darin, die Umschlagleistung und die Performance eines automatisierten Containerterminals deutlich zu erhöhen.

Zur Lösung der Aufgabe wird eine Umschlaganlage mit den Merkmalen des Anspurchs 1 vorgeschlagen. Vorzugsweise wird die Anzahl der Quertransporter im kompakten Container-Terminal vergrößert und damit an dieser Stelle die Umschlagleistung erhöht. Die Quertransporter bewegen sich auf einer einzigen Ebene, d.h. es gibt keine Überschneidung mehr beim Verfahren eines Quertransporters und bei gleichzeitigem Ladevorgang des zweiten Quertransporters durch den Lagerkran. Im Zwischenlager, das die Schnittstelle zwischen Stapelkran und Quertransporter bildet, können mehrere Container pro Lagermodul gepuffert werden. Stapelkran und Quertransporter operieren vollkommen unabhängig voneinander. Die Be- und Entladung der LKWs ist auf den Ladespuren über den gesamten Bereich des Terminals möglich. Die Performance des gesamten Terminals wird erhöht.

Vorzugsweise ist vorgesehen, dass jeder Quertransporter mit einer Übergabe- bzw. Übernahmevorrichtung zum Umsetzen eines Containers von einem oder auf ein Zwischenlager ausgestattet ist. Dadurch wird erreicht, dass die Quertransporter nicht direkt von den Stapelkranen beladen werden, sie bedienen sich statt dessen aus dem Zwischenlager, das parallel zu den Schienenfahrbahnen angeordnet ist.

In einer Ausgestaltung der Erfindung besteht die Übergabe- bzw. Übernahmevorrichtung aus einem quer zur Verfahrrichtung des Quertransporters in den Bereich des Zwischenlagers verschieb- oder verfahrbaren Lastträger für den Container. Vorzugsweise ist der Lastträger als linear antreibbarer Verschiebewagen ausgebildet ist, der auf einer am Quertransporter angeordneten Schienenfahrbahn verfahrbar ist. Als Linearantrieb sind alle konventionellen Antriebe, wie Kettentriebe, Zahnstangentriebe, Kolben-Zylinder-Einheiten öder Ähnliche denkbar.

Um eine ungestörte Übergabe des von einem Lastträger aufgenommenen Containers an das Zwischenlager zu ermöglichen, ist nach einer Ausführungsform der Erfindung vorgesehen, dass die als Winkelkonsole gestalteten Zwischenlager die Schienenfahrbahn und den Quertransporter mindestens teilweise derart frei überkragen, dass der Lastträger bei unterhalb des Zwischenlagers positioniertem Quertransporter unter das Zwischenlager verfahrbar Ist, wobei in der Winkelkonsole in Richtung Lastträger verlaufende seitlich offene Schlitze vorgesehen sind, die von auf dem Lastträger angeordneten, die Auflagepunkte des Containers untergreifenden Vertikalhubvorrichtungen für den Container durchfasst werden. Vorzugsweise sind die Vertikalhubvorrichtungen der Lastaufnehmer als hydraulische Kolben-Zylinder-Einheiten ausgebildet, die im Abstandsraster der Eckbeschläge von ISO-Containern auf den Lastaufnehmern angeordnet sind.

Die Lastaufnehmer nehmen auf den Quertransportem zwei Endpositionen ein. In der ersten Endposition, in der sich die Lastaufnehmer unterhalb des als Winkelkonsole gestalteten Zwischenlagers befinden, werden die Container im Zwischenlager durch die Aktivierung der hydraulischen Lastaufnehmer angehoben beziehungsweise abgesetzt. Erst wenn der Lastträger durch lineare Verschiebung auf dem Quertransporter in seiner zweiten Endposition seitlich neben dem Zwischenlager angelangt ist und die Lastaufnehmer hydraulisch abgesenkt sind, kann der Quertransporter mit oder ohne Container verfahren werden.

Eine besonders hohe Umschlagleistung lässt sich erzielen, wenn nach einer Ausführungsform der Erfindung zwei Schienenfahrbahnen parallel zueinander verlaufend das Containerlager quer zu den Lagermodulen durchdringen, und kopfseitig durch Wechseleinrichtungen für die Quertransporter miteinander verbunden sind, um ein Umsetzen der Quertransporter von einer der Schienenfahrbahnen auf die andere parallele Schienenfahrbahn zu ermöglichen. Durch diese Anordnung lassen sich beide Schienenfahrbahnen optimal im geschlossenen Umlauf nutzen, wobei die Quertransporter, die in einer gemeinsamen Ebene und in einer festgelegten Drehrichtung die gesamte Lagerbreite durchfahren, jeden beliebigen Lagermodul erreichen und an den Endpunkten kopfseitig der Schienenfahrbahnen umgesetzt werden können, um auf der parallelen Schienenfahrbahn zurückzufahren. Die Quertransporter selbst werden dabei von den Stapelkranen nicht direkt beladen, sie bedienen sich selbsttätig aus den Zwischenlagern, die parallel zu den Schienenfahrbahnen angeordnet sind.

Dadurch, dass die Schienenfahrbahnen durch die gesamte Breite des Containerlagers verlaufen, können vorzugsweise unterhalb der Schienenfahrbahnen die Fahrspuren für die LKW's und unterhalb neben den Zwischenlagern die Ladespuren für die LKWs verlaufen. Die Be- und Entladung der LKWs ist dadurch auf den Ladespuren über den gesamten Bereich des Terminals möglich.

Vorzugsweise bestehen die Wechseleinrichtungen aus je einem brückenartigen Stahlbau mit längs verlaufenden Schienen, deren Spurweiten denjenigen der Schienenfahrbahnen für die Quertransporter entsprechen und die stirnseitig mit Schienenfahrwerken versehen sind, die auf kopfseitig quer zu den Schienenfahrbahnen der Quertransporter aufgeständerten Schienenfahrbahnen zwischen den beiden parallelen Schienenfahrbahnen der Quertransporter in Endpositionen verfahrbar sind, in denen die Schienen auf dem brückenartigen Stahlbau mit jeweils einer der Schienenfahrbahnen für die Quertransporter fluchten.

Da das Auf- und Abfahren des Quertransporters auf beziehungsweise von der Wechseleinrichtung möglichst stoßfrei erfolgen sollte, werden vor der Überfahrt der Quertransporter automatisch die Lücken, die zwischen den Schienenfahrbahnen des Quertransporters und der Wechseleinrichtung vorgesehen sind, mit entsprechenden horizontal und vertikal ausgerichteten Passstücken geschlossen.

Vorzugsweise sind die Zwischenlager mit den vertikalen Schenkeln der Winkelkonsole seitlich an den Trägern für die Schienenfahrbahnen befestigt und zur Aufnahme von bis zu vier Containern pro Lagermodul ausgebildet sind. Eine ausreichende Pufferfunktion der Zwischenlager ist somit erzielbar.

Die neuartige Umschlaganlage für ein Container-Terminal im See- oder Binnenhafen erfüllt die vorgegebenen Bedingungen. Innerhalb des kompakten Container-Terminals ist mittels Quertransportern eine kontinuierliche Verteilung der Container zu allen Lagermodulen möglich. Eine größere Anzahl Quertransporter verfährt auf vorzugsweise zwei parallelen Schienenfahrbahnen mit zwei Wechseleinrichtungen an den Kopfstationen, die ein Umsetzen der Quertransporter ermöglichen und deren Verfügbarkeit erhöhen. Dabei fahren die Quertransporter getaktet in einer einzigen festgelegten Drehrichtung und in ein und derselben horizontalen Ebene. Die Quertransporter werden von den Stapelkranen nicht direkt beladen, sie bedienen sich selbsttätig aus den Zwischenlagern, die parallel zu den Schienenfahrbahnen angeordnet sind. Unterhalb der Schienenfahrbahnen und der Zwischenlager befinden sich mindestens vier Lade- bzw. Fahrspuren für LKWs, so dass eine große Zahl von LKWs gleichzeitig bedient werden können.

Zusammengefasst ergeben sich gegenüber dem Stand der Technik die folgenden Vorteile:
a) Die Anzahl der Quertransporter im kompakten Container-Terminal wird vergrößert und damit an dieser Stelle die Umschlagleistung erhöht.
b) Die Quertransporter bewegen sich auf einer Ebene, d.h. es gibt keine Überschneidung mehr beim Verfahren eines Quertransporters und bei gleichzeitigem Ladevorgang des zweiten Quertransporters durch den Stapelkran.
c) Im Zwischenlager, das die Schnittstelle zwischen Stapelkran und Quertransporter bildet, können mindestens vier Container pro Lagermodul gepuffert werden.
d) Stapelkran und Quertransporter operieren unabhängig voneinander.
e) Die Be- und Entladung der LKWs ist auf den Ladespuren über den gesamten Bereich des Terminals möglich.
f) Die Performance des gesamten Terminals wird erhöht.

Ein Ausführungsbeispiel der Erfindung ist in der Zeichnung dargestellt und wird nachfolgend beschrieben. Es zeigt:
- Figur 1: ein Layout eines Container-Terminals nach einer Ausführungsform der Erfindung,
- Figur 2: einen Ausschnitt von Figur 1 aus dem Bereich der Lager-Ein- bzw. Ausfahrt,
- Figur 3: einen Ausschnitt von Figur 1 aus dem Bereich des LKW-Wendeplatzes,
- Figur 4: einen Ausschnitt von Figur 1 als Draufsicht auf den Bereich der Lager-Ein- beziehungsweise Ausfahrt,
- Figur 5: einen Schnitt durch das Zwischenlager und eine Ansicht der Quertransporter,
- Figur 6: einen Schnitt durch den Be- und Entladebereich im Containerlager,
- Figur 7: eine Seitenansicht der Lager-Ein- beziehungsweise Ausfahrt und
- Figur 8: eine Vorderansicht der Wechseleinrichtung an der Lager-Einbeziehungsweise Ausfahrt.

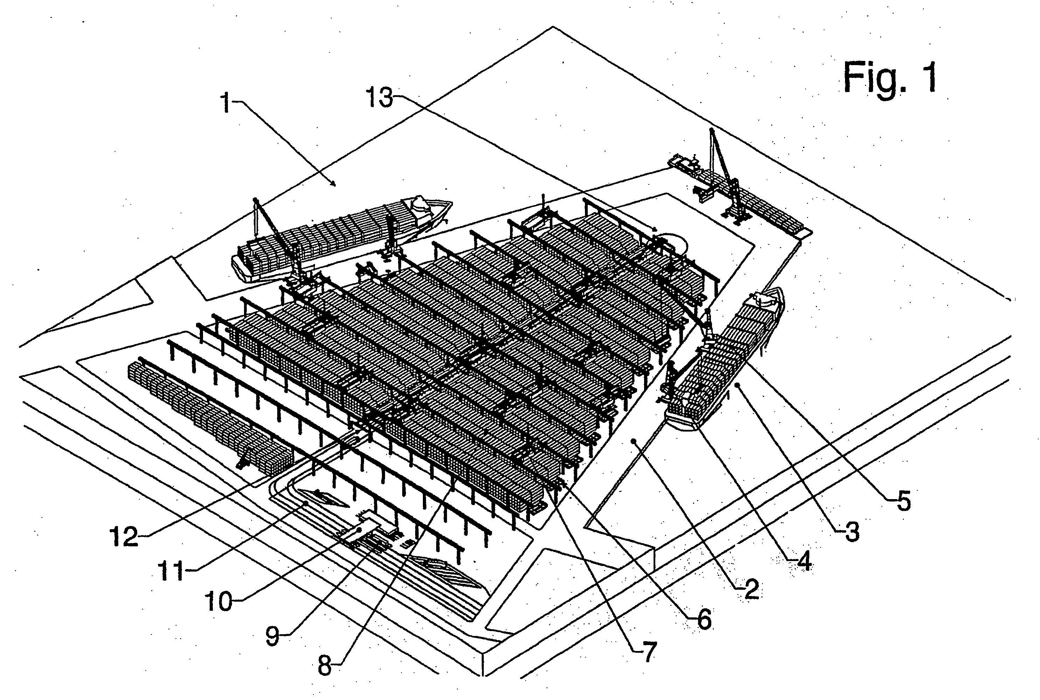

Die Figur 1 zeigt in einer perspektivischen Darstellung ein kompaktes Container-Terminal 1 und ein am Kai 2 liegendes Container-Schiff 3. Hafenmobilkrane 4 be-bzw. entladen die Container 5 und transportieren diese vom bzw. zum Übergabeplatz 6. Der Übergabeplatz bildet die Schnittstelle zwischen dem Stapelkran 7 und den Häfenmobilkranen 4. Die verwendete Anzahl der Stapelkrane pro Lagermodul 8 richtet sich nach der jeweiligen Länge des Lagermoduls 8. LKWs 9 werden durch das Terminal-Gate 10 über die LKW-Fahrbahn 11 zur Lager-Ein-bzw. Ausfahrt 12, durch die Lagermodule 8 hindurch zum Wendeplatz 13 und wieder zurück zum Terminal-Gate geführt. Auf der Fahrstrecke zwischen der Lager-Ein- bzw. Ausfahrt 12 und dem Wendeplatz 13 findet die Be- und Entladung der LKWs auf den durch das Bedienpersonal zugewiesenen Ladeplätzen statt.

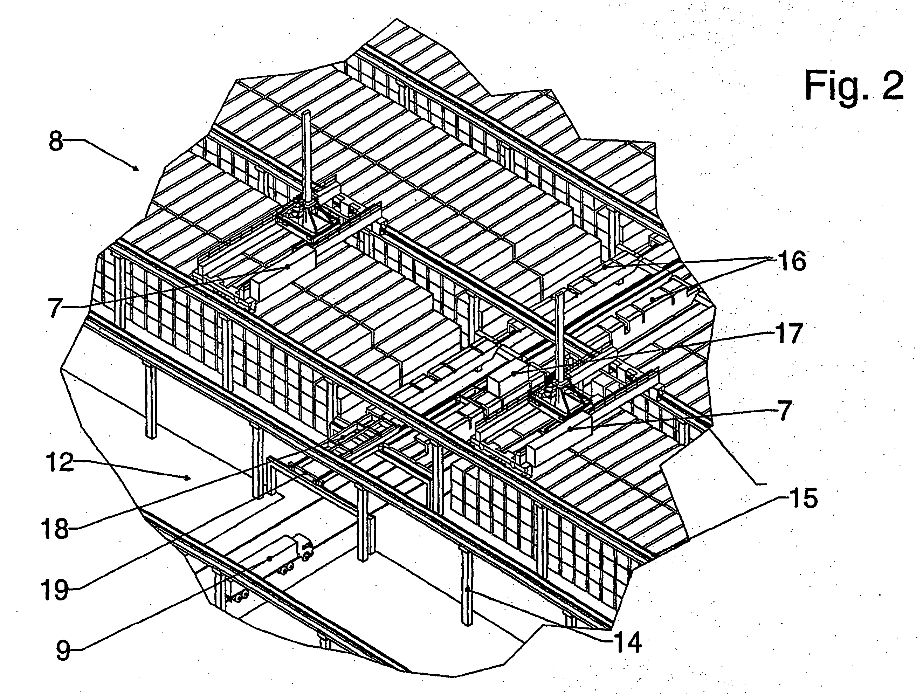

Figur 2 zeigt In einem Ausschnitt aus Fig. 1 einen LKW 9 an der Lager-Ein- bzw. Ausfahrt 12 auf dem Weg zu einem Be- bzw. Entladeplatz, der ihm am Terminal-Gate durch das Bedienpersonal zugewiesen wurde. Weiterhin erkennt man zwei Stapelkrane 7 auf der mittels Stützen 14 hochgelegten Schienenfahrbahn 15 des Lagermoduls 8. Die im Querschnitt winkelförmigen Zwischenlager 16 bilden eine Art Konsole und dienen den Containern 17 als Auflage. Erkennbar ist das Auffahren eines Quertransporters 18 auf die erste Wechseleinrichtung 19.

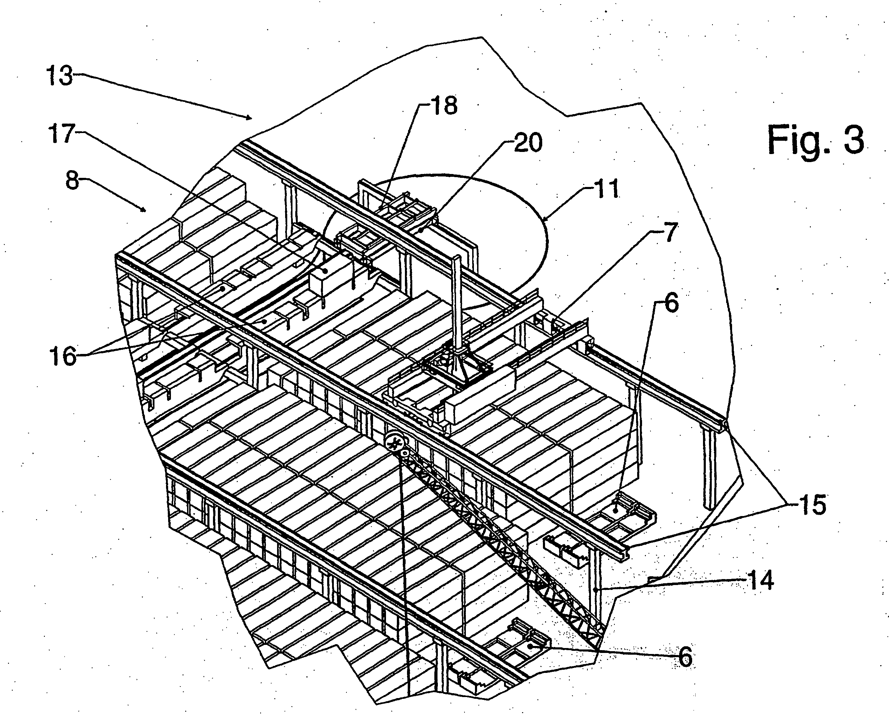

Figur 3 zeigt den Wendeplatz 13 mit der LKW-Fahrbahn 11. Weiterhin erkennt man einen Stapelkran 7 auf der mittels Stützen 14 hochgelegten Schienenfahrbahn 15 des Lagermoduls 8. Die im Querschnitt winkelförmigen Zwischenlager 16 dienen den Containern 17 als Auflage und Puffer und bilden die Schnittstelle zwischen dem Stapelkran 7 und dem Quertransporter 18. Der Quertransporter 18, der sich auf der zweiten Wechseleinrichtung 20 befindet, tauscht im Moment die Schienenfahrbahn.

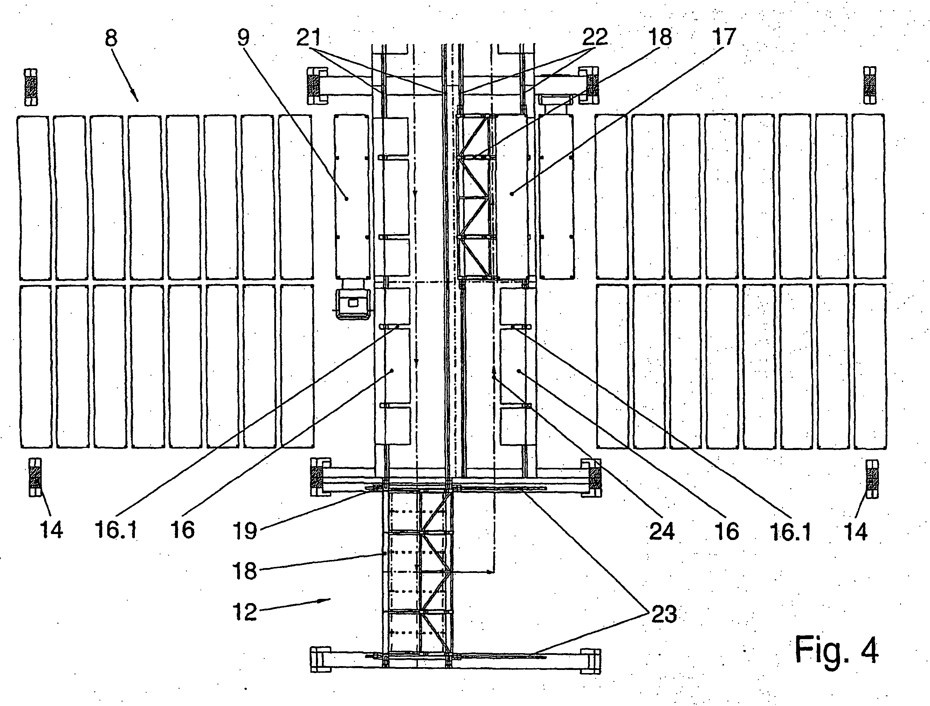

Figur 4 ist ein Ausschnitt aus Fig. 1. Die Figur zeigt eine Draufsicht auf das Containerlager im Bereich der Lager-Ein- bzw. Ausfahrt 12. Dargestellt ist das Lagermodul 8, ein LKW 9 in der Ladespur in Richtung Lager-Ausfahrt, die Kranbahnstützen 14 und ein Container 17, der im Zwischenlager 16 gelagert ist. Die Schienenfahrbahn 15 des Stapelkrans ist in dieser Figur nicht dargestellt. Das Zwischenlager ist im Abstandsraster der Eckbeschläge der ISO-Container schlitzartig 16.1 geöffnet.

Die Quertransporter 18 bewegen sich auf den parallel verlaufenden Schienenfahrbahnen 21 und 22 durch das Containerlager. Im Bereich der Lager-Ein- bzw. Ausfahrt 2 ermöglicht die erste Wechseleinrichtung 19, welche auf einer Schienenfahrbahn 23 verfährt, das Umsetzen der Quertransporter von der einen zur anderen Schienenfahrbahn. Die Position 24 zeigt eine mögliche Fahrtrichtung (hier gegen den Uhrzeigersinn dargestellt) für das Verfahren der Quertransporter.

Analog zur ersten Wechseleinrichtung 19 an der Lager-Ein- bzw. Ausfahrt 12 übernimmt die zweite Wechseleinrichtung 20 am Wendeplatz 13 die Funktion des Spurwechsein der Quertransporter 18.

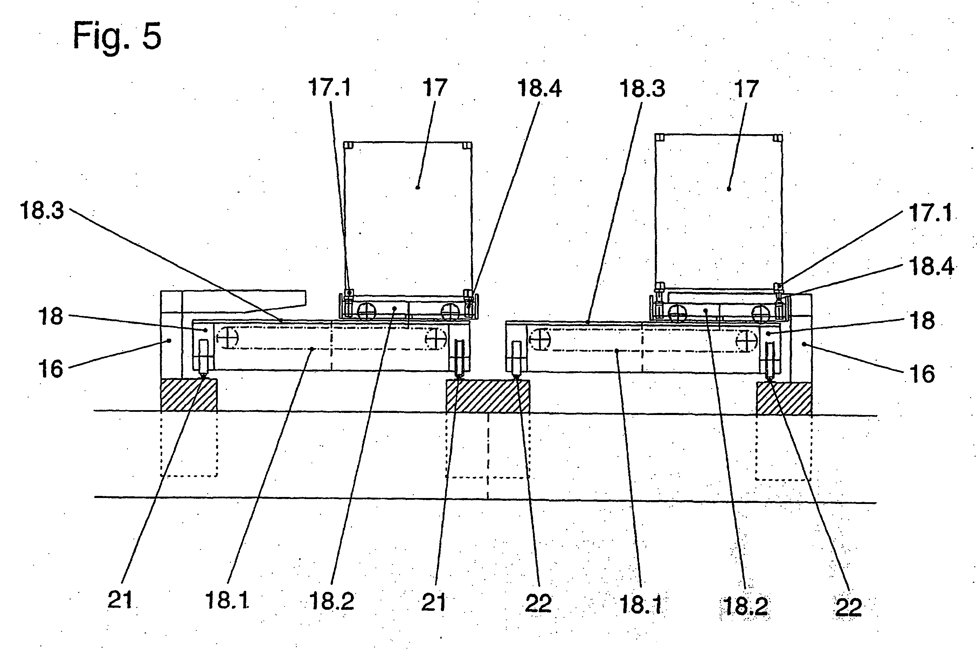

Figur 5 zeigt einen Schnitt durch das Zwischenlager 16 und eine Ansicht der Quertransporter 18. Erkennbar sind die Winkelform des Zwischenlagers 16 und jeweils ein Quertransporter 18 auf den beiden Schienenfahrbahnen 21 und 22. Ein Linearantrieb 18.1 (nach Stand der Technik) bewegt den Lastträger 18.2 im Reversierbetrieb, geführt auf der Schienenfahrbahn 18.3, je nach Auftrag in eine der beiden Endpositionen "Zwischenlager" und "Quertransport-Fahrt".

Auf der linken Seite der Figur 5 erkennt man den Lastträger 18.2 auf dem Quertransporter 18 in der Position "Quertransport-Fahrt". Im Abstandsraster der Container-Eckbeschläge sind acht hydraulische Lastaufnehmer 18.4 (hier dargestellt für 20 Fuß und 40 Fuß-Container) vorgesehen. Der Container 17 steht mit seinen Eckbeschlägen 17.1 auf vier nicht aktivierte, hydraulischen Lastaufnehmern 18.4. In dieser Position kann der Quertransporter 18 entlang der Schienenfahrbahnen 21 bzw. 22 verfahren werden.

Auf der rechten Seite der Zeichnungsfigur erkennt man den Lastträger 18.2 auf dem Quertransporter 18 in der Position "Zwischenlager". Der Container 17 steht mit seinen Eckbeschlägen 17.1 auf vier aktivierten, hydraulischen Lastaufnehmern 18.4, die in die, im Abstandsraster der Container-Eckbeschläge angeordneten, schlitzartigen Öffnungen im horizontalen Winkelschenkel des Zwischenlagers eintauchen. In dieser Position kann das Zwischenlager 16 be- und entladen werden.

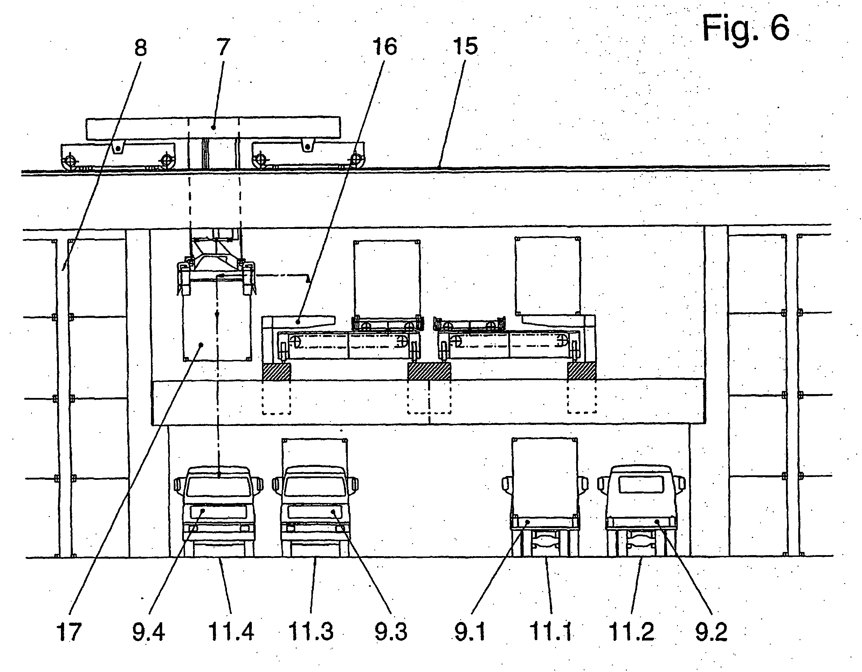

Figur 6 stellt einen Schnitt durch den Be- und Entladebereich im Containerlager dar. Erkennbar ist die Durchfahrtsöffnung in Querrichtung durch ein Lagermodul 8. Die LKWs 9.1 und 9.3 befinden sich auf den Fahrspuren 11.1 und 11.3, die LKWs 9.2 und 9.4 auf den Ladespuren 11.2 und 11.4. Der vorher im winkelförmigen Zwischenlager 16 gelagerte Container 17, wird mit dem Stapelkran 7, der auf der Schienenfahrbahn 15 verfährt, zum LKW 9.4 befördert und dort abgesetzt.

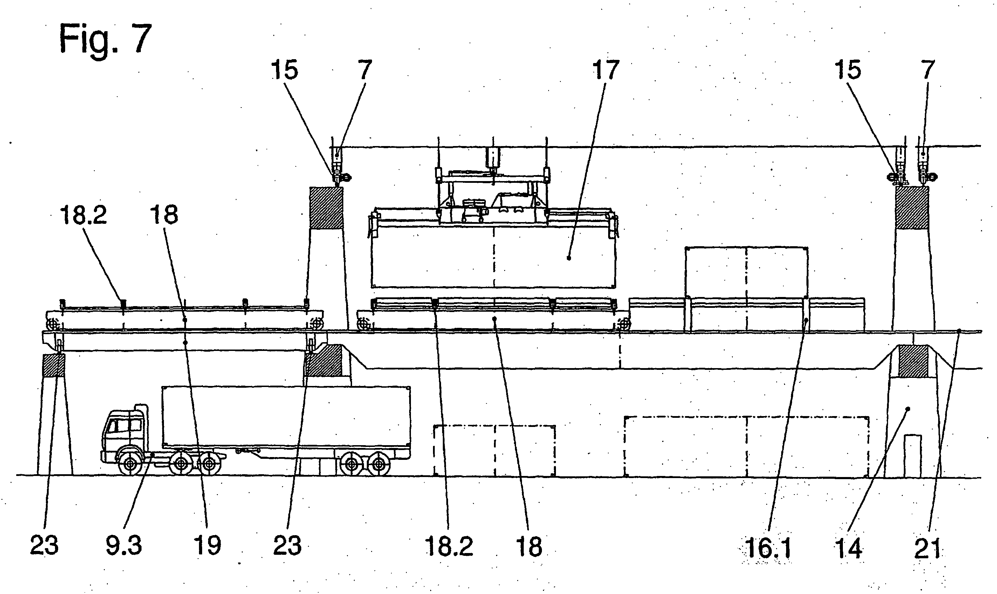

Figur 7 ist eine Seitenansicht der Lager-Ein- bzw. Ausfahrt 12. Die Figur zeigt den Stapelkran 7 auf der mittels Stützen 14 hochgelegten Schienenfahrbahn 15 während des Umschlags des Containers 17 in das Zwischenlager 16. Des weiteren erkennt man den Quertransporter 18 auf der ersten Schienenfahrbahn 21 in Warteposition vor einer möglichen Übernahme des Containers. Der Linearantrieb des Lastträgers 18.2 auf dem Quertransporter verschiebt die im Abstandsraster der Container-Eckbeschläge angeordneten hydraulischen Lastaufnehmer in die schlitzartigen Öffnungen 16.1 des Zwischenlagers.

Ein zweiter Quertransporter 18 befindet sich auf der ersten Wechseleinrichtung 19. Diese ermöglicht den Transport über die Schienenfahrbahn 23 zur parallel verlaufenden zweiten Schienenfahrbahn 22. Unterhalb der Schienenfahrbahnen 21 und 22 und des Zwischenlagers 16 bleibt eine ausreichend große Durchfahrtshöhe für LKWs wie z.B. 9.3. Analog zur Lager-Ein- bzw. Ausfahrt 12 gestaltet sich die Situation am Wendeplatz 13 mit der zweiten Wechseleinrichtung.

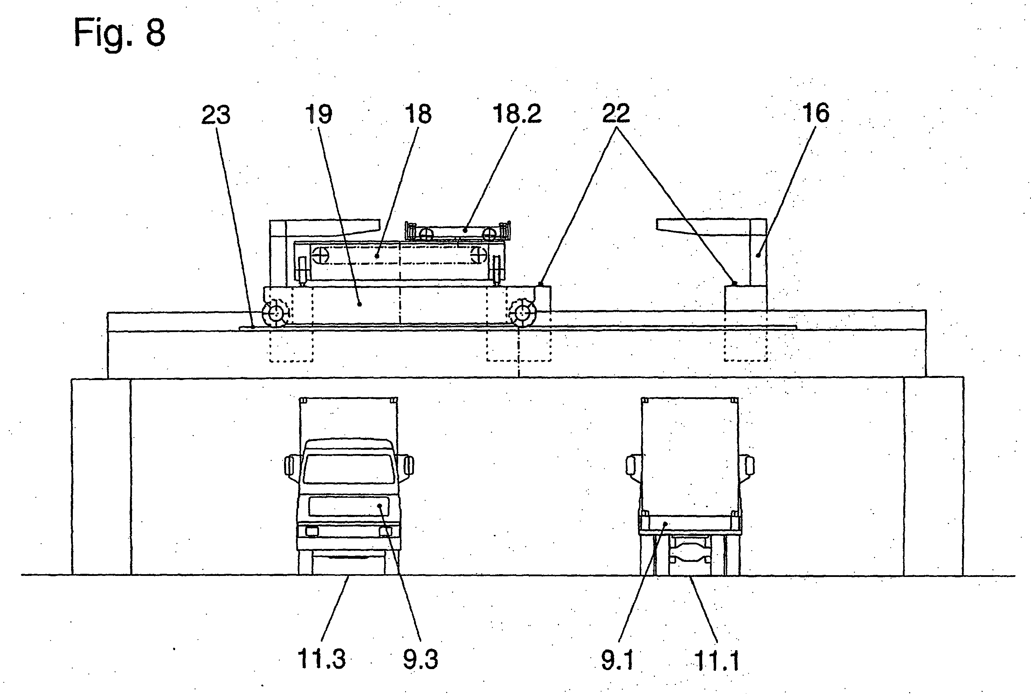

Figur 8 schließlich zeigt eine Vorderansicht der ersten Wechseleinrichtung 19 an der Lager-Ein- bzw. Ausfahrt. Die Figur zeigt die erste Wechseleinrichtung 19 auf der Schienenfahrbahn 23, einen Quertransporter 18 mit seinem Lastträger 18.2 vor oder nach dem Spurwechsel zu oder von der ersten Schienenfahrbahn 22 und das im Querschnitt winkelförmige Zwischenlager 16. Unterhalb der Wechseleinrichtung 19 sind LKWs 9.1 und 9.3 auf den Fahrspuren 11.1 und 11.3 dargestellt.

### Bezugszeichenliste

- 1: Container-Terminal
- 2: Kai
- 3: Container-Schiff
- 4: Hafenmobilkran
- 5: Container auf dem Schiff
- 6: Übergabeplatz
- 7: Stapelkran
- 8: Lagermodul
- 9: LKW
- 9.1: LKW Fahrspur EIN
- 9.2: LKW Ladespur EIN
- 9.3: LKW Fahrspur AUS
- 9.4: LKW Ladespur AUS
- 10: Terminal-Gate
- 11: LKW-Fahrbahn
- 11.1: Fahrspur EIN
- 11.2: Ladespur EIN
- 11.3: Fahrspur AUS
- 11.4: Ladespur AUS
- 12: Lager-Ein- bzw. Ausfahrt
- 13: Wendeplatz
- 14: Kranbahnstütze
- 15: Schienenfahrbahn
- 16: Zwischenlager
- 16.1: Schlitzöffnung im Zwischenlager
- 17: Container im Lager
- 17.1: Container-Eckbeschlag
- 18: Quertransporter
- 18.1: Linearantrieb
- 18.2: Lastträger
- 18.3: Schienenfahrbahn
- 18.4: hydraulischer Lastaufnehmer
- 19: Wechseleinrichtung 1 an der Lager-Ein- bzw. Ausfahrt
- 20: Wechseleinrichtung 2 am Wendeplatz
- 21: Schienenfahrbahn 1 für den Quertransporter
- 22: Schienenfahrbahn 2 für den Quertransporter
- 23: Schienenfahrbahn für die Wechseleinrichtung 1
- 24: Drehrichtung für die Quertransporter

## Patentansprüche

1. Umschlaganlage in einem See- oder Binnenhafen, insbesondere für ISO-Container, mit einem entlang eines Kais angeordneten, aus einzelnen zeilenartigen Lagermodulen (8) bestehenden Container-Terminal (1) und mindestens einer mit den Lagermodulen (8) zusammenwirkenden Ladeanlage für den Lastumschlag von und zu einem am Kai liegendem Container-Schiff (3), wobei je Lagermodul (8) mindestens ein aufgeständerter Stapelkran (7) die Übernahme, den Horizontaitransport und das Stapeln der Container (17) übernimmt und mit auf mindestens einer quer zu den Lagermodulen (8) verlaufenden Schienenfahrbahn (21, 22) in einer horizontalen Ebene unterhalb der Transportebene der Stapelkrane (7) und oberhalb von Ladespuren (11.2, 11.4) für LKWs (9) verfahrbaren und unabhängig voneinander agierenden Quertransportern (18) zusammenwirkt, die den Horizontaltransport der Container (17) zwischen den Lagermodulen (8) übernehmen,
**dadurch gekennzeichnet,**
**dass** eine von der Größe des Container-Terminals (1) abhängige Anzahl von mehr als zwei Quertransportem (18) in ein und derselben Ebene auf der mindestens einen Schienenfahrbahn (21,22) in den Bereich von je einem Lagermodul (8) zugeordneten Zwischenlagern (16) bewegbar sind, die jeweils seitlich parallel zu der Schienenfahrbahn (21, 22) der Quertransporter (18) angeordnet sind und Schnittstellen zwischen dem Stapelkran (7) und den Quertransportem (18) bilden.

2. Umschlaganlage nach Anspruch 1, **dadurch gekennzeichnet, dass** jeder Quertransporter (18) mit einer Übergabe- bzw. Übernahmevorrichtung zum Umsetzen eines Containers (17) von einem oder auf ein Zwischenlager (16) ausgestattet ist.

3. Umschlaganlage nach Anspruch 2, **dadurch gekennzeichnet, dass** die Übergabe- bzw. Übernahmevorrichtung aus einem quer zur Verfahrrichtung des Quertransporters (18) in den Bereich des Zwischenlagers (16) verschieb- oder verfahrbaren Lastträger (18.2) für den Container (17) besteht.

4. Umschlaganlage nach Anspruch 3, **dadurch gekennzeichnet, dass** der Lastträger (18.2) als linear antreibbarer Verschiebewagen ausgebildet ist, der auf einer am Quertransporter (18) angeordneten Schienenfahrbahnen (18.3) verfahrbar ist.

5. Umschlaganlage nach den Ansprüchen 1 bis 4, **dadurch gekennzeichnet, dass** die als Winkelkonsole gestalteten Zwischenlager (16) die mindestens eine Schienenfahrbahn (21, 22) und den Quertransporter (18) mindestens teilweise derart frei überkragen, dass der Lastträger (18.2) bei unterhalb des Zwischenlagers (16) positioniertem Quertransporter (18) unter das Zwischenlager (16) verfahrbar ist, wobei in dem horizontalen Teil der Winkelkonsole in Richtung Lastträger (18.2) verlaufende seitlich offene Schlitze (16.1) vorgesehen sind, die von auf dem Lastträger (18.2) angeordneten, die Auflagepunkte des Containers (17) untergreifenden Vertikalhubvorrichtungen für den Container (17) durchfasst werden.

6. Umschlaganlage nach Anspruch 5, **dadurch gekennzeichnet, dass** die Vertikalhubvorrichtungen der Lastträger (18.2) als hydraulische Kolben-Zylinder-Einheiten ausgebildet sind.

7. Umschlaganlage nach einem der Ansprüche 1 bis 6, **dadurch gekennzeichnet, dass** zwei Schienenfahrbahnen (21, 22) parallel zueinander verlaufend das Container-Terminal (1) quer zu den Lagermodulen (8) durchdringen, die kopfseitig durch Wechseleinrichtungen (19, 20) für die Quertransporter (18) miteinander verbunden sind, um ein Umsetzen der Quertransporter (18) von einer der Schienenfahrbahnen (21, 22) auf die andere parallele Schienenfahrbahn (22, 21) zu ermöglichen.

8. Umschlaganlage nach einem der Ansprüche 1 bis 7, **dadurch gekennzeichnet, dass** unterhalb der mindestens einen Schienenfahrbahn (21, 22) die Fahrspuren (11.1, 11.3) für die LKWs (9) verlaufen.

9. Umschlaganlage nach einem der Ansprüche 1 bis 8, **dadurch gekennzeichnet, dass** unterhalb neben den Zwischenlagern (16) die Ladespuren (11.2, 11.4) für die LKWs (9) verlaufen.

10. Umschlaganlage nach Anspruch 7, **dadurch gekennzeichnet, dass** die Quertransporter (18) auf den parallel zueinander verlaufenden Schienenfahrbahnen (21, 22) und den kopfseitigen Wechseleinrichtungen (19, 20) getaktet in einer festgelegten Drehrichtung (24) verfahrbar sind.

11. Umschlaganlage nach Anspruch 7, **dadurch gekennzeichnet, dass** die Wechseleinrichtungen (19, 20) aus je einem brückenartigen Stahlbau mit längs verlaufenden Schienenfahrbahnen (23) bestehen, deren Spurweiten denjenigen der Schienenfahrbahnen. (21, 22) für die Quertransporter (18) entsprechen und die stirnseitig mit Schienenfahrwerken versehen sind, die auf kopfseitig quer zu den Schienenfahrbahnen (21, 22) der Quertransporter (18) aufgeständerten Schienenfahrbahnen (23) zwischen den beiden Schienenfahrbahnen (21, 22) der Quertransporter (18) in Endpositionen verfahrbar sind, in denen die Schienenfahrbahnen auf den brückenartigen Stahlbau mit jeweils einer der Schienenfahrbahnen (21, 22) für die Quertransporter fluchten.

12. Umschlaganlage nach einem der Ansprüche 5 bis 7, **dadurch gekennzeichnet, dass** die Zwischenlager (16) mit den vertikalen Schenkeln der Winkelkonsole seitlich an den Trägern für die Schienenfahrbahnen (21, 22) befestigt sind und zur Aufnahme von bis zu vier Containern (17) pro Lagermodul (8) ausgebildet sind.

## Claims

1. Cargo-handling facility in a sea or inland port, in particular for ISO containers, having a container terminal (1), which is disposed along a quay and consists of individual linear storage modules (8), and having at least one loading facility cooperating with the storage modules (8) for load transfer from and to a container ship (3) at the quayside, wherein for each storage module (8) at least one elevated stacking crane (7) transfers, horizontally transports and stacks the containers (17) and cooperates with transverse transporters (18) which act independently of each other and which can travel on at least one rail track (21, 22) extending transverse to the storage modules (8) in a horizontal plane below the transport plane of the stacking crane (7) and above the loading lanes (11.2, 11.4) for lorries (9), which transverse transporters ensure the horizontal transportation of the containers (17) between the storage modules (8),
**characterised in that**
a number of more than two transverse transporters (18), this number being dependent on the size of the container terminal (1), can be moved in one and the same plane on the at least one rail track (21, 22) into the region of intermediate storage points (16) allocated to a respective storage module (8), which intermediate storage points are respectively disposed laterally in parallel with the rail track (21, 22) of the transverse transporters (18) and form interfaces between the stacking crane (7) and the transverse transporters (18).

2. Cargo-handling facility as claimed in claim 1, **characterised in that** each transverse transporter (18) is provided with a transfer device for transferring a container (17) from or to an intermediate storage point (16).

3. Cargo-handling facility as claimed in claim 2, **characterised in that** the transfer device consists of a load carrier (18.2) for the containers (17), which load carrier can be displaced or can travel transverse to the travel direction of the transverse transporter (18) into the region of the intermediate storage point (16).

4. Cargo-handling facility as claimed in claim 3, **characterised in that** the load carrier (18.2) is formed as a linearly drivable shifting carriage which can travel on a rail tracks [sic] (18.3) disposed on the transverse transporter (18).

5. Cargo-handling facility as claimed in claims 1 to 4, **characterised in that** the intermediate storage points (16) formed as angular brackets freely project at least partially over the at least one rail track (21, 22) and the transverse transporter (18) in such a way that the load carrier (18.2) can travel below the intermediate storage point (16) when the transverse transporter (18) is positioned below the intermediate storage point (16), wherein in the horizontal part of the angular bracket laterally open slits (16.1) extending in the direction of the load carriers (18.2) are provided through which pass vertical lifting devices for the container (17), which are disposed on the load carrier (18.2) and engage below the contact points of the container (17).

6. Cargo-handling facility as claimed in claim 5, **characterised in that** the vertical lifting devices of the load carriers (18.2) are formed as hydraulic piston-cylinder units.

7. Cargo-handling facility as claimed in any one of claims 1 to 6, **characterised in that**, in extending in parallel with each other, two rail tracks (21, 22) extend through the container terminal (1) transverse to the storage modules (8), which are connected to each other at the head end by interchange devices (19, 20) for the transverse transporters (18) in order to permit transfer of the transverse transporters (18) from one of the rail tracks (21, 22) to the other parallel rail track (22, 21).

8. Cargo-handling facility as claimed in any one of claims 1 to 7, **characterised in that** below the at least one rail track (21, 22) extend the lanes (11.1, 11.3) for the lorries (9).

9. Cargo-handling facility as claimed in any one of claims 1 to 8, **characterised in that** below and next to the intermediate storage points (16) extend the loading lanes (11.2, 11.4) for the lorries (9).

10. Cargo-handling facility as claimed in claim 7, **characterised in that** the transverse transporters (18) can travel on the mutually parallel rail tracks (21, 22) and the head-end interchange devices (19, 20) in a cycle and in a fixed rotational position (24).

11. Cargo-handling facility as claimed in claim 7, **characterised in that** the interchange devices (19, 20) each consist of a bridge-like steel structure with longitudinally extending rail tracks (23), the track widths of which correspond to those of the rail tracks (21, 22) for the transverse transporters (18), and which are provided on the end-face with rail travelling mechanisms which can travel on rail tracks (23), which are elevated at the head end transverse to the rail tracks (21, 22) of the transverse transporters (18), between the two rail tracks (21, 22) of the transverse transporters (18) into end positions in which the rail tracks are aligned on the bridge-like steel structure with a respective one of the rail tracks (21, 22) for the transverse transporters.

12. Cargo-handling facility as claimed in any one of claims 5 to 7, **characterised in that** the intermediate storage points (16) are attached with the vertical limbs of the angular brackets laterally to the supports for the rail tracks (21, 22) and are formed to receive up to four containers (17) per storage module (8).

## Revendications

1. Installation de transbordement dans un port maritime ou dans un port intérieur, notamment pour conteneurs ISO, avec un terminal pour conteneurs (1), agencé le long d'un quai, composé de rangées de modules de stockage individuels (8) et au moins une installation de transbordement qui coopère avec les modules de stockage (8) lors du transbordement de charges à partir et à destination d'un navire porte-conteneurs (3) disposé le long du quai, au moins une grue empileuse (7) montée sur un support assurant la prise en charge, le transport horizontal et l'empilage des conteneurs (17) pour chaque module de stockage (8), et coopérant avec des transporteurs transversaux mobiles sur au moins une voie ferrée (21, 22) qui s'étend perpendiculairement aux modules de stockage (8), dans un plan horizontal, au-dessous du plan de transport de la grue empileuse (7) et au-dessus de pistes de chargement (11.2, 11.4) pour camions (9), et agissent indépendamment les uns des autres, lesquels assurent le transport horizontal des conteneurs (17) entre les modules de stockage (8),
**caractérisée en ce que**
des transporteurs transversaux (18), en nombre supérieur à deux, en en fonction de la taille du terminal pour conteneurs (1), peuvent se déplacer dans un seul et même plan, sur la voie ferrée (21, 22) au moins prévue, dans la zone d'entrepôts (16) associés chacun à un module de stockage (8), lesquels sont respectivement disposés parallèlement à la voie ferrée (21, 22) des transporteurs transversaux (18) et forment des interfaces entre la grue empileuse (7) et les transporteurs transversaux (18).

2. Installation de transbordement selon la revendication 1, **caractérisée en ce que** chaque transporteur transversal (18) est équipé d'un dispositif de délivrance resp. de prise en charge pour le transfert d'un conteneur (17) en provenance ou à destination d'un entrepôt (16).

3. Installation de transbordement selon la revendication 2, **caractérisée en ce que** le dispositif de délivrance resp. de prise en charge pour les conteneurs (17) consiste en un porte-charge (18.2) qui est mû par glissement ou roulement, perpendiculairement au sens de marche du transporteur transversal (18), dans la zone de l'entrepôt (16).

4. Installation de transbordement selon la revendication 3, **caractérisée en ce** le porte-charge (18.2) est conçu en tant que chariot qui, entraîné linéairement, peut de déplacer sur une voie ferrée (18.3) qui est disposée sur le transporteur transversal (18).

5. Installation de transbordement selon les revendications 1 à 4, **caractérisée en ce que** l'entrepôt (16), aménagé en tant que console à équerre (16) surplombe librement en porte-à-faux, au moins partiellement la voie ferrée (21, 22) au moins prévue et le transporteur transversal (18) de manière à ce que le porte-charge (18.2), puisse être déplacé sous ledit entrepôt (16), quand le transporteur transversal (18) est positionné sous l'entrepôt (16), des fentes (16.1), ouvertes latéralement, orientées dans la direction du porte-charge (18.2), étant prévues dans la partie horizontale de la console en équerre, lesquelles sont traversées par des dispositifs élévateurs à course verticale pour les conteneurs (17), qui, disposés sur le porte-charge (18.2), agrippent par dessous les points d'appui dudit conteneur (17).

6. Installation de transbordement selon la revendication 5, **caractérisée en ce que** les dispositif élévateurs à course verticale des porte-charges (18.2) sont conçus en tant qu'unités piston-cylindre hydrauliques.

7. Installation de transbordement selon l'une des revendications 1 à 6, **caractérisée en ce que** deux voies ferrées (21, 22) parallèles pénètrent dans le terminal pour conteneurs (1) perpendiculairement par rapport aux modules de dépôt (8), lesquelles sont reliées ensemble, côté tête, par des dispositif de changement (19, 20) pour les transporteurs transversaux (18), afin de permettre le passage des transporteurs transversaux (18) de l'une des voies ferrées (21, 22) à l'autre voie ferrée parallèle (22, 21).

8. Installation de transbordement selon l'une des revendications 1 à 7, **caractérisée en ce que**, au-dessous de la voie ferrée (21, 22) au moins prévue, s'étendent les pistes de roulement (11.1, 11.3) pour les camions (9).

9. Installation de transbordement selon l'une des revendications 1 à 8, **caractérisée en ce que** les pistes de chargement (11.2, 11.4) pour les camions (9) s'étendent au-dessous, à côté des entrepôts (16).

10. Installation de transbordement selon la revendication 7, **caractérisée en ce que** les transporteurs transversaux (18) peuvent rouler, en cadence, dans une direction de rotation fixée (24), sur les voies ferrées (21, 22), disposées parallèlement, et sur les dispositifs de changement (19, 20) côté tête.

11. Installation de transbordement selon la revendication 7, **caractérisée en ce que** les dispositifs de changement (19, 20) consistent chacun en une structure en acier, avec des voies ferrées (23), qui s'étendent longitudinalement, dont les écartements de rails correspondent à ceux des voies ferrées (21, 22) pour les transporteurs transversaux (18), et qui sont pourvues, côté frontal, de mécanismes de roulement sur rails qui peuvent être amenés, en roulant sur des voies ferrées en surélévation, côté tête, perpendiculairement aux voies ferrées (21, 22) des transporteurs transversaux (18), entre les deux voies ferrées (21, 22) des transporteurs transversaux (18), dans des positions finales, dans lesquelles les voies ferrées de la structure en acier en forme de pont sont en alignement avec chacune des voies ferrées (21, 2) pour les transporteurs transversaux.

12. Installation de transbordement selon l'une des revendications 5 à 7, **caractérisée en ce que** les entrepôts (16) sont fixés latéralement, avec les branches verticales de la console en équerre, aux supports des voies ferrées (21, 22) et sont configurés pour recevoir jusqu'à quatre conteneurs (17) par modules (8) d'entrepôt.
